**Europäisches Patentamt**

**European Patent Office**

**Office européen des brevets**

(19)

(11) Veröffentlichungsnummer **0 010 170**
**B1**

(12) **EUROPÄISCHE PATENTSCHRIFT**

(45) Veröffentlichungstag der Patentschrift: **03.11.82**

(51) Int. Cl.³: **G 05 B 19/04**

(21) Anmeldenummer: **79103505.8**

(22) Anmeldetag: **18.09.79**

(54) **Speicherprogrammierbare Steuerung.**

(30) Priorität: **28.09.78 DE 2842372**

(43) Veröffentlichungstag der Anmeldung:
**30.04.80 Patentblatt 80/9**

(45) Bekanntmachung des Hinweises auf die Patenterteilung:
**03.11.82 Patentblatt 82/44**

(84) Benannte Vertragsstaaten:
**DE FR SE**

(56) Entgegenhaltungen:
**DE - A - 2 500 320**
**DE - A - 2 817 536**
**FR - A - 2 393 358**
**US - A - 3 921 146**
**US - A - 3 942 158**
**US - A - 4 030 080**

(73) Patentinhaber: **SIEMENS AKTIENGESELLSCHAFT**
**Berlin und München**
**Postfach 22 02 61**
**D-8000 München 22 (DE)**

(72) Erfinder: **Felder, Heinz-Friedrich, Dipl.-Ing.**
**Steinforststrasse 30**
**D-8520 Erlangen (DE)**
Erfinder: **Schlang, Manfred, Dipl.-Ing.**
**Schulstrasse 5**
**D-8551 Heroldsbach (DE)**

Courier Press, Leamington Spa, England.

Speicherprogrammierbare Steuerung

Die Erfindung bezieht sich auf eine speicherprogrammierbare Steuerung mit folgenden Merkmalen:

(a) ein Zentralsteuerwerk ist mit Eingabebaugruppen mit einer Anzahl von Eingängen für die Signalzustände aus dem Prozeß und mit Ausgabebaugruppen mit einer Anzahl von Ausgängen für die Ausgangszustände für den Prozeß verbunden,

(b) das Zentralsteuerwerk ist ferner mit einem Programmspeicher zur Aufnahme eines Steuerungsprogramms verbunden,

(c) das Zentralsteuerwerk ist weiterhin mit einem Speicher zur Aufnahme eines Prozeßabbildes verbunden, der einen Eingabebereich und einen Ausgangsbereich aufweist,

(d) zu Beginn eines jeden Bearbeitungszyklus des Steuerungsprogramms werden die Signalzustände der Eingänge der Eingabebaugruppen in den Eingabebereich des Prozeßabbildes übernommen und quittiert,

(e) das Zentralsteuerwerk bearbeitet die Anweisungen des Steuerungsprogramms mit den im Prozeßabbild hinterlegten Signalzuständen und speichert die ermittelten Ausgangszustände im Ausgangsbereich des Prozeßabbildes,

(f) nach jedem Bearbeitungszyklus werden die Ausgangszustände in die Ausgabebaugruppen übernommen und quittiert.

Eine derartige Steuerung ist aus der DE—A—25 00 320 bekannt.

Es ist ferner bereits ein Speicher mit einzelnen steckbaren Einheiten für eine speicherprogrammierbare Steuerung bekannt, bei dem bei einer Speicherabfrage einer nicht vorhandenen Speichereinheit der Binärcode der Instruktion: keine Operation (NOP) erzeugt wird. Hierdurch ist jedoch nicht feststellbar, ob ein Speicher während des Betriebes ausgefallen ist (vgl. US—A—40 30 080).

Die Aufgabe der vorliegenden Erfindung besteht darin, bei einer speicherprogrammierten Steuerung der eingangs genannten Art die Betriebssicherheit und die Verarbeitungsgeschwindigkeit zu erhöhen. Diese Aufgabe wird erfindungsgemäß dadurch gelöst, daß eine dem Prozeßabbild adressenmäßig parallel liegende Kontrollspur vorgesehen ist, in der die gesteckten bzw. nichtgesteckten Eingabebaugruppen und Ausgabebaugruppen durch ein beim Neustart aus den Quittierungen abgeleitetes Kontrollbit gekennzeichnet sind, der Datenausgang der Kontrollspur mit dem Zentralsteuerwerk verbunden ist und die Kontrollspur während des Betriebes der Steuerung gleichzeitig mit den adressierten Baugruppen abfragbar ist.

Auf diese Weise können Ausfälle von Peripheriebaugruppen während des Betriebes der Steuerung erfaßt, Adressierfehler, d.h. Zugriffsfehler auf nicht versorgte Prozeßabbildbereiche festgestellt und der Datenaustausch zwischen Peripherie und Abbild beschleunigt werden.

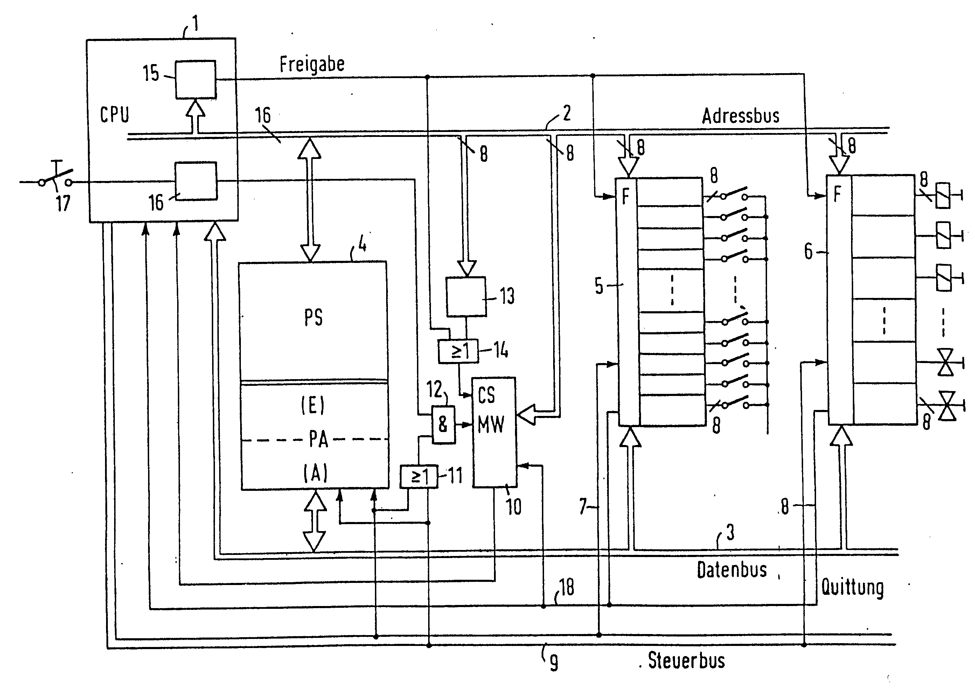

Anhand eines in der Zeichnung dargestellten Beispiels sei die Erfindung näher erläutert, wobei zunächst der bekannte Aufbau einer Steuerung angegeben und anschließend die erfindungsgemäße Verbesserung beschrie ben wird.

An ein Zentralsteuerwerk sind über einen Adressbus, einen Datenbus und einen Steuerbus eine Speichereinheit und die Prozeßsignalformer angeschlossen, die in Eingabebaugruppen und in Ausgabebaugruppen zusammengefaßt sind. Die Eingabebaugruppen sind mit Peripherie beschaltet, die schematisch als Meldekontakte dargestellt ist. Die Eingabebaugruppen entstören die aus dem Prozeß kommenden Signale und passen diese an das interne Signalniveau der Steuerung an. Bei einer byteweisen Anwahl der Eingänge einer Eingabebaugruppe legt das Zentralsteuerwerk 1 (Central Processing Unit CPU) die Adresse dieser Eingabebaugruppe auf den Adreßbus 2. Ein Adreßdecoder 15 im Zentralsteuerwerk 1 decodiert die Adresse und gibt ein Freigabesignal auf den Freigabeeingang F der Eingabebaugruppen 5. Wird gleichzeitig auf dem Steuerbus 9 ein Lesebefehl über die Lesebefehlsleitung 7 gegeben, so gibt die adressierte Eingabebaugruppe die Signalzustände der angewählten Eingänge über den Datenbus 3 aus. Gleichzeitig wird eine Quittung über die Quittungssammelleitung 18 an das Zentralsteuerwerk 1 gegeben, wenn die betreffende Eingabebaugruppe ordnungsgemäß arbeitet. Die Ausgabebaugruppen sind mit Peripherie beschaltet, die den Prozeß steuern, beispielsweise Schütze oder Magnetventile. Die Ausgabebaugruppen enthalten Befehlsspeicher, denen Verstärker zur unmittelbaren Ansteuerung der angeschlossenen Peripherie nachgeschaltet sind. Bei einer byteweisen Anwahl von Ausgängen einer Ausgabebaugruppe legt das Zentralsteuerwerk 1 die Adresse dieser Baugruppe auf den Adreßbus 2. Der Adreßdecoder 15 gibt die Ausgabebaugruppen über den Freigabeeingang F frei. Wird gleichzeitig auf dem Steuerbus 9 ein Schreibbefehl über die Schreibbefehlsleitung 8 gegeben, so übernimmt der Befehlsspeicher der angewählten Ausgabebaugruppe den Signalzustand vom Datenbus. Gleichzeitig wird ein Quittungssignal über die Quittungssammelleitung 18 an das Zentralsteuerwerk 1 gegeben.

Die Speichereinheit 4 ist als wortweise organisierter Schreib-Lese-Speicher ausgebildet. Die Speichereinheit 4 enthält u.a. einen Speicherteil PS als Programmspeicher und einen Speicherteil PA zur Aufnahme des Prozeßabbildes. Der Speicherteil PA für das Prozeßabbild umfaßt einen Eingabebereich E und einen Ausgangsbereich A. Der Programmspeicher PS enthält das Steuerungsprogramm, das sich aus einzelnen Anweisungen zusammensetzt. Das Zentralsteuerwerk 1 liest und interpretiert den Inhalt des Programmspeichers PS. Entsprechend den Anweisungen des Steuerungsprogramms werden beispielsweise die Signalzustände von Eingängen abgefragt, miteinander verknüpft und das Ergebnis der Verknüpfungen als Ausgangszustände gewonnen. Das Zentralsteuerwerk 1 bearbeitet die im Programmspeicher PS gespeicherten Anweisungen des Steuerungsprogramms sequentiell und zyklisch. Zu Beginn eines jeden Programmdurchlaufs werden zunächst die Signalzustände aller Eingänge der Eingabebaugruppen 5 blockweise in den Eingabebereich des Prozeßabbildes PA übernommen. Der Eingabebereich E des Prozeßabbildes PA enthält somit am Beginn einer Programmbearbeitung ein Abbild der Signalzustände aller Eingänge. Während der sequentiellen Abarbeitung der Anweisungen des Steuerungsprogramms arbeitet das Zentalsteuerwerk 1 erfindungsgemäß ausschließlich mit dem Prozeßabbild PA. Die Ergebnisse der Verknüpfungen der Signalzustände der Eingänge nach Maßgabe der Anweisungen des Steuerungsprogramms werden im Ausgangsbereich A des Prozeßabbildes PA abgelegt. Am Ende des Bearbeitungszyklus enthält der Ausgangsbereich A des Prozeßabbildes PA die Ausgangszustände für alle Ausgänge. Die Ausgangszustände werden jetzt blockweise an die Ausgabebaugruppen 6 weitergegeben.

Der nächste Bearbeitungszyklus beginnt wiederum mit der Eingabe der Signalzustände der Eingänge der Eingabebaugruppen 5. Die Signalzustände der Eingabebaugruppen und die Ausgangszustände für die Ausgabebaugruppen werden somit in jedem Bearbeitungszyklus mit dem Prozeßabbild PA ausgetauscht.

Wie bereits erwähnt, greift das Zentralsteuerwerk 1 bei den Anweisungen des Steuerungsprogramms nicht unmittelbar auf die Eingabe- und Ausgabebaugruppen zu, sondern arbeitet ausschließlich mit dem Prozeßabbild PA, das in jedem Bearbeitungszyklus erneuert und im zugehörigen Bereich des Prozeßabbildes PA hintgerlegt wird. Hierdurch wird die Verarbeitungsgeschwindigkeit des Steuerungsprogramms erhöht. Ein unerwünschtes kurzzeitiges Ansprechen ("Flattern") einer der an einen Ausgang der Ausgabebaugruppen angeschlossenen Peripherie wird zuverlässig verhindert, da eine logisch widersprüchliche Ansteuerung während der Bearbeitung des Steuerungsprogramms ausgeschlossen ist.

Bei einem handelsüblichen Steuerungsgerät ist im allgemeinen der Anschluß einer bestimmten Anzahl von Eingabe- und Ausgabebaugruppen möglich. Wenn dieses Steuerungsgerät zur Steuerung eines Prozesses eingesetzt wird, so werden meist nicht sämtliche möglichen Eingabe- und Ausgabebaugruppen im Gerät gesteckt. Hier erweist es sich gemäß der Erfindung als vorteilhaft, eine Kontrollspur 10 vorzusehen, in der die gesteckten bzw. nicht gesteckten Eingabebaugruppen und Ausgabebaugruppen vermerkt sind. Die Kontrollspur 10 liegt adressenmäßig parallel zum Prozeßabbild PA. Die Freigabe der Kontrollspur 10 über den Freigabeeingang CS erfolgt durch das Ausgangssignal eines ODER—Gatters 14, das eingangsseitig mit einem Adreßdecoder 13 und mit dem Adreßdecoder 15 im Zentralsteuerwerk 1 verbunden ist.

Der Adreßdecoder 13 erzeugt ein Freigabesignal, wenn der Adressenbereich des Prozeßabbildes PA auf dem Adreßbus 2 liegt. Der Adreßdecoder 15 erzeugt ein Freigabesignal, wenn der Adressenbereich der Eingabe- und Ausgabebaugruppen auf dem Adreßbus 2 liegt. Die Kontrollspur 10 wird somit immer dann angewählt, wenn eine Adresse des Prozeßabbildes oder eine Adresse der Eingabe- oder Ausgabebaugruppen auf dem Adreßbus 2 liegt. Der Adreßeingang der Kontrollspur 10 ist mit dem Adreßbus 2 verbunden. Der Dateneingang der Kontrollspur 10 ist mit der Quittungssammelleitung 18 verbunden. Der Datenausgang der Kontrollspur 10 ist mit dem Zentralsteuerwerk 1 verbunden.

Die Erstellung der Kontrollspur 10 kann in der Weise erfolgen, daß zunächst alle Eingabebaugruppen und alle Ausgabebaugruppen als nicht beschaltet gekennzeichnet werden Während einer Anlaufroutine wird bei Betätigung einer Taste 17 "Neustart" ein Steuerregister 16 gesetzt, das u.a. ein Schreibfreigabesignal für die Kontrollspur 10 abgibt. Das Schreibfreigabesignal wird einem UND-Gatter 12 eingangsseitig zugeführt. Der zweite Eingang des UND-Gatters 12 ist über ein ODER-Gatter 11 mit der Lesebefehlsteitung 7 und der Schreibbefehlsleitung 8 des Steuerbus 9 beschaltet. Der Ausgang des UND-Gatters 12 ist auf den Schreibbefehlseingang MW (Memory write) der Kontrollspur 10 geführt. Während der Anlaufroutine spricht das Zentralsteuerwerk 1 nacheinander sämtliche Eingabebaugruppen 5 und sämtliche Ausgabebaugruppen 6 an. Über den Adreßdecoder 15 wird ein Freigabesignal für die Eingabe- und Ausgabebaugruppen ausgegeben. Dieses Freigabesignal spricht über das ODER-Gatter 14 auch den Anwahleingang CS der Kontrollspur 10 an. Die Kontrollspur 10 ist über den Schreibbefehlseingang MW auf Schreiben gestellt. Wird nun eine gesteckte Eingabebaugruppe angesprochen, so gibt diese eine Quittung auf die Quittungssammelleitung 18, die in die Kontrollspur 10 eingeschrieben wird. Dies geschieht bei jeder gesteckten Eingabe- und Ausgabebaugruppe. Die Quittungssignale der gesteckten Eingabe- und Ausgabebaugruppen geben die Kontrollbits in der Kontrollspur. Ist eine angesprochene Eingabe- oder Ausgabebaugruppe nicht gesteckt, so erscheint kein Quittungssignal und die betreffende Eingabe- oder Ausgabebaugruppe bleibt in der Kontrollspur als nicht gesteckt gekennzeichnet.

Es können zur Erstellung der Kontrollspur auch zunächst alle Eingabe- und Ausgabe-baugruppen als gesteckt gekennzeichnet wer-den. Bei der Anlaufroutine werden die Kontrollbits der nicht gesteckten Eingabe- und Ausgabebaugruppen komplementiert.

Beim blockweisen Austausch der Signalzustände zwischen dem Prozeßabbild PA und den Eingabebaugruppen bzw. den Ausgabebaugruppen brauchen nur die gesteckten Eingabe- bzw. Ausgabebaugruppen berücksichtigt werden. Wenn bei einer praktisch aus-geführten Steuerung nicht sämtliche Eingabe-und Ausgabebaugruppen gesteckt sind, wird durch die Benutzung der Kontrollspur die Zeit verkürzt, die für den Austausch der Signalzustände zwischen dem Prozeßabbild PA und den Eingabe- bzw. Ausgabebaugruppen benötigt wird. Durch die Kontrollspur wird der Blocktransfer zwischen dem Prozeßabbild und den Eingabebaugruppen bzw. den Ausgabebaugruppen beschleunigt.

Beim Austausch des Prozeßabbildes mit den Eingabebaugruppen 5 bzw. den Ausgabebaugruppen 6 erwartet das Zentralsteuerwerk 1 nur bei jeder in der Kontrollspur 10 als gesteckt gekennzeichneten Eingabe- bzw. Ausgabebaugruppe eine Quittung über die Quittungssammelleitung 18. Daher muß auch nur bei den gesteckten Eingabe- und Ausgabebaugruppen die maximal zulässige Quittungsverzugszeit abgewartet werden, bevor eine Entscheidung über die weitere Bearbeitung des Steuerungsprogramms oder über eine Alarmmeldung "Baugruppe defekt" getroffen wird. Wäre dagegen die Kontrollspur nicht vorgesehen, so müßte das Zentralsteuerwerk bei jedem Ausbleiben einer Quittung die Quittungsverzugszeit abwarten, also auch bei nicht gesteckten Eingabe- und Ausgabebaugruppen.

Die Kontrollspur 10 ermöglicht auch das Erkennen von Programmierfehlern im Steuerungsprogramm. Wird bei der Bearbeitung des Steuerungsprogramms auf eine Adresse im Prozeßabbild PA zugegriffen, die in der Kontrollspur als nicht mit einer. Eingabe-oder Ausgabebaugruppe beschaltet gekennzeichnet ist, so erkennt das Steuerwerk aus dem entsprechenden Eintrag in der Kontrollspur den Programmierfehler.

**Patentanspruch**

Speicherprogrammierbare Steuerung mit fol-genden Merkmalen:

(a) ein Zentralsteuerwerk (1) ist mit Eingabebaugruppen (5) mit einer Anzahl von Eingängen für die Signalzustände aus dem Prozeß und mit Ausgabebaugruppen (6) mit einer Anzahl von Ausgängen für die Ausgangszustände für den Prozeß verbunden,

(b) das Zentralsteuerwerk (1) ist ferner mit einem Programmspeicher (PS in 4) zur Aufnahme eines Steuerungsprogramms verbunden,

(c) das Zentralsteuerwerk (1) ist weiterhin mit einem Speicher (PA in 4) zur Aufnahme eines Prozeßabbildes verbunden, der einen Eingabebereich (E) und einen Ausgangsbereich (A) aufweist,

(d) zu Beginn eines jeden Bearbeitungszyklus des Steuerungsprogramms werden die Signalzustände der Eingänge der Eingabebaugruppen (5) in den Eingabebereich (E) des Prozeßabbildes übernommen und quittiert,

(e) das Zentralsteuerwerk (1) bearbeitet die Anweisungen des Steuerungsprogramms mit den im Prozeßabbild hinterlegten Signalzuständen und speichert die ermittelten Ausgangszustände im Ausgangsbereich (A) des Prozeßabbildes,

(f) nach jedem Bearbeitungszyklus werden die Ausgangszustände in die Ausgabebaugruppen (6) übernommen und quittiert,

dadurch gekennzeichnet, daß eine dem Prozeßabbild adressenmäßig parallel liegende Kontrollspur (10) vorgesehen ist, in der die gesteckten bzw. nichtgesteckten Eingabebaugruppen und Ausgabebaugruppen durch ein beim Neustart aus den Quittierungen abgeleitetes Kontrollbit gekennzeichnet sind, der Datenausgang der Kontrollspur (10) mit dem Zentralsteuerwerk (1) verbunden ist und die Kontrollspur (10) während des Betriebes der Steuerung gleichzeitig mit den adressierten Baugruppen (5, 6) abfragbar ist.

**Revendication**

Commande programmable à l'aide de mémoires, avec les caractéristiques suivantes:

(a) une unité de commande centrale (1) est reliée à des groupes de modules d'entrée (5) à un certain nombre d'entrées pour les états des signaux du processus et à des groupes de modules de sortie (6) à un certain nombre de sorties pour les états de sortie pour le processus,

(b) l'unité de commande centrale (1) est en outre reliée à une mémoire de programme (PS en 4) pour recevoir un programme de commande,

(c) l'unité centrale de commande (1) est en outre reliée à une mémoire (PA en 4) pour recevoir une image du processus présentant une plage d'entrées (E) et une plage de sorties (A),

(d) au début de chacun des cycles de traitement du programme de commande, les états des signaux d'état des entrées des groupes de modules d'entrée (5) sont pris en charge dans la plage d'entrée (E) de l'image du processus et font l'objet d'un accusé de réception,

(e) l'unité de commande central (1) traite les instructions du programme de commande avec les signaux d'état contenus dans l'image du processus et mémorise dans la plage de sortie (A) de l'image du processus, les états de sortie obtenus,

(f) après chaque cycle de traitement, les états de sortie sont pris en charge et reconnus dans le groupe de modules de sortie (6), caractérisée par le fait qu'il est prévu en parallèle à l'image du processus, du point de vue des adresses, une piste de contrôle (10) dans laquelle les groupes enfichés ou non enfichés des modules d'entrée et de sortie sont caractérisés au redémarrage par un bit de contrôle dérivé des accusés de réception, la sortie des données de la piste de contrôle (10) est reliée à l'unité de commande centrale (1) et la piste de contrôle (10) est susceptible, pendant le fonctionnement de la commande, d'être en même temps interrogée avec les groupes de modules adressés (5, 6).

## Claim

Store programmable control means having the following features:

(a) a central control unit (1) is connected to input assemblies (5) having a number of inputs for the signal states from the process and connected to output assemblies (6) having a number of outputs for the output states for the process,

(b) the central control unit (1) is further connected to a programme store (PS in 4) for storing a control programme;

(c) the central control unit (1) is further connected to a store (PA in 4) for storing a process profile, which has an input region (E) and an output region (A),

(d) at the start of each operating cycle of the control programme, the signal states of the inputs of the input assemblies (5) are transferred into the input region (E) of the process profile and acknowledged,

(e) the central control unit (1) possesses the statements of the control programme with the signal states recorded in the process profile and stores the ascertained output states in the output region (A) of the process profile;

(f) following each processing cycle, the output states are transferred into the output assemblies (6) and acknowledged, characterised in that there is provided a control track (10) which is arranged parallel to the process profile in terms of address and in which the input assemblies and output assemblies which are plugged in or not plugged in are characterised by a control bit derived from the acknowledgements during the new start, and that the data output of the control track (10) is connected to the central control unit (1) and that during the operation of the control unit, the control track (10) can be interrogated simultaneously with the addressed assemblies (5, 6).

0 010 170